# EUROPEAN PATENT SPECIFICATION

(11) **EP 3 332 334 B1**
(45) Date of publication and mention of the grant of the patent: **07.09.2022**
(21) Application number: 16747968.2
(22) Date of filing: 27.07.2016
(51) Int. Cl.: G06F 16/29

(54) **EFFICIENT LOCATION-BASED ENTITY RECORD CONFLATION**
EFFIZIENTE ORTSBASIERTE DATENSATZ-ZUSAMMENFÜHRUNG
COMBINAISON EFFICACE DES DONNEES GEOGRAPHIQUES

(30) Priority: 05.08.2015 US 201514818305
(43) Date of publication of application: 13.06.2018
(73) Proprietor: Microsoft Technology Licensing, LLC, Redmond, WA 98052-6399 (US)
(72) Inventor: SHAH, Shital, Redmond, Washington 98052-6399 (US)
(74) Representative: Goddar, Heinz J.
(86) International application number: PCT/US2016/044133
(87) International publication number: WO 2017/023627

(56) References cited:
- WO-A1-2009/087197
- WO-A1-2014/144745
- US-A1- 2007 276 845
- US-B1- 9 020 986

## Description

### Background

Entity records corresponding one or more entities can be obtained from a variety of sources. Unfortunately, entity records from any particular source may include duplicates, i.e., one or more entity records that reference the same entity. As a single source of entity records may contain duplicate entity records for a given entity, the potential for duplicate entity records among records from multiple sources is even greater. Of course, it is desirable to have a single set of entity records without duplicates. Thus, in obtaining entity record information from one or more sources, there is a need to match and merge all of the entity records that pertain to one entity into a single entity record. The process of deduplication by matching and merging multiple entity records into a set of unique entity records is referred to as conflation.

Duplicate entity records may be found in a corpus of entity records for a variety of reasons, including individual records describing the same entity in slightly different manners, e.g., "Wild Ginger Chinese Cuisine" may also be known as "Wild-Ginger Asian Restaurant," etc. Similarly, two entity records that correspond to the same entity may identify a location for an entity, such as using an address or a latitude/longitude pair, yet the location data may not be described in the same manner. For example, an address (i.e., the location data of an entity record) "100 SE Main Street, Apt 100" in a first entity record may correspond to the same location as referenced by a second entity record in which the address is specified as "100 South East Main Street, Suite #100." Spelling errors, GPS errors, software bugs, abbreviations, omissions, and the like may individually and together lead to plural entity records in a corpus of entity records that reference the same entity but are not readily matched as being the same (and, therefore, should be conflated to a single entity record.)

Irrespective of the reason for plural entity records for a single entity in a corpus of records, from a user/consumer perspective, when a request is made regarding that particular entity, it is frustrating, confusing and distracting to receive multiple "correct" answers in response to the request, each of which identifies the entity but with slightly different information.

The process of conflating entity records typically involves pair-wise comparisons. Using pair-wise comparisons, conflating small sets of entity records can be completed relatively quickly, i.e., in near-real time. Unfortunately, pair-wise comparison techniques can be generalized as a *Θ(n²)* process, such that as the number of records increases linearly, the number of pair-wise comparisons increases in square and, thus, the amount of time to conduct record conflation (based on pair-wise comparisons) expands in square with the linear increase in records to compare. Also often, one needs to conflate small numbers of additional entity records into a large corpus of entity records that have already been conflated. Using full pair-wise comparison methods makes such incremental processing inefficient.

WO 2009/087197 A1 refers to a determination of geographic locations of events in a linear referencing system (LRS). A LRS event geocoding database and schema is created from portions of a postal addressing system schema and a geographic information system (GIS) schema. LRS data is encoded as postal address data as defined in the postal addressing system. The LRS data and GIS data are then conflated to populate the LRS event geocoding database using similar transformation logic as for current postal address geocoding.

US 9 020 986 B1 refers to a method of conflating geographic feature data. A data conflation server conflates data from a first data set describing locations of geographic features with high precision but containing only partial metadata describing the features with a second data set containing metadata describing the geographic features but lack precise location information.

WO 2014/144745 A1 refers to a non-deterministic disambiguation and matching of business locale data. For improving search and match systems and methods, a process is disclosed by which candidates of a user inquiry are evaluated, selected and prioritized. A further process is disclosed by which a match result and data regarding the match experience are provided to an inquirer or an inquiring system, including confidence indicators that describe a relative strength of the match to the inquiry, and attributes to indicate feedback on data used to propagate the match.

US 2007/0276845 A1 discloses locality indexes for use with electronic maps and databases and a method for indexing localities (i.e. a city or town within a state, province, county). Locality names obtained from several locality name sources are mapped to a map database with geographic features of a geographic database. Subsequently, the steps of context-sensitive tokenizing, normalizing, optimizing and matching of the locality names are conducted to eliminate duplicate and variant locality names, while preserving meaningfully different names.

### Summary

The invention is defined by a computer implemented method, a computer-readable medium and a computer system according to the independent claims. Preferred embodiments are defined in the dependent claims.

The following Summary is provided to introduce a selection of concepts in a simplified form that are further described below in the Detailed Description. The Summary is not intended to identify key features or essential features of the claimed subject matter, nor is it intended to be used to limit the scope of the claimed subject matter.

According to aspects of the disclosed subject matter, a first processing phase is made in regard to conflating location data of a corpus of entity records. This first processing phase is conducted in an offline, asynchronous manner to aggregate the location data of entity records of a corpus of entity records into location clusters, each location cluster of entity records considered to correspond to a same structure at a particular geographic location from a logical point of view. A second processing phase is conducted in a near real-time manner in regard to conflating received entity records with the existing entity records of the corpus of entity records. This second processing phase first matches received entity records to a location cluster, and then matches a received entity record to an entity record within the location cluster. Upon matching the received entity record with an entity record in a location cluster, the two entity records are conflated.

According to aspects of the disclosed subject matter, a computer-implemented method for conflating a corpus of entity records is presented. As part of the method, a corpus of entity records is accessed. The corpus of entity records comprises a plurality of entity records where each entity record includes location data and attribute data; the location data comprising information for locating the corresponding entity of the entity record, and the attribute data comprising information regarding the referenced entity at the location of the location data. A set of location clusters is generated from the corpus of entity records. This set of location clusters is generated based on the location data of each entity record, and each location in any given location cluster is viewed as being a reference to a same geographic location as other entity records in the same location cluster. The set of location clusters is subsequently accessed and each of the entity records of the corpus of entity records is associated with a location cluster of the set of location clusters. The entity records of each location cluster of the set of location clusters are merged into a single conflated entity record for the location cluster and the merged/conflated entity record is stored in a conflated location data store as part of a corpus of conflated entity records.

According to additional aspects of the disclosed subject matter, methods and computer-readable medium bearing computer-executable instructions for executing a method for conflating location information is presented. In operation, a set of location clusters is provided. Each location cluster comprises one or more entity records of a corpus of entity records. Moreover, each entity record comprises location data and attribute data. Each of the one or more entity records of each location cluster as viewed as referencing the same geographic location. Additional entity records, to be conflated with the corpus of entity records, are received. Each of the entity records of the additional entity records is then matched to a location cluster of the set of location clusters according to the location data of the entity records of the additional entity records. The entity records included in each location cluster of the set of location clusters are then merged into a single conflated entity record for the location cluster and stored in a conflated location data store as a corpus of conflated entity records. According to still additional aspects of the disclosed subject matter, the clustering and the merging are conducted in an asynchronous manner.

According to still further aspects of the disclosed subject matter, a computer system providing a location conflation service for conflating entity records is presented. The system comprises a processor and a memory, where the processor executes instructions stored in the memory as part of or in conjunction with additional components to conflate entity records into a set of conflated entity records. The additional components comprise, at least, a location clustering component, a record merging component, a location cluster data store and a conflated location data store. The address clustering component is configured to access a corpus of entity records and generate a set of location clusters from the corpus of entity records. The location clustering component then stores the set of location clusters in the location cluster data store. Each location cluster of the set of location clusters comprises one or more entity records of the corpus of entity records, and each entity record in a location cluster is viewed as referencing the same location as other entity records of the location cluster. The record merging component merges the entity records of a location cluster into a single conflated entity record and stores the conflated locations records as a corpus of conflated entity records in a conflated location data store. Further still, the address clustering component operates asynchronously from the record merging component.

### Brief Description of the Drawings

The foregoing aspects and many of the attendant advantages of the disclosed subject matter will become more readily appreciated as they are better understood by reference to the following description when taken in conjunction with the following drawings, wherein:
Figure 1 is a block diagram illustrating an overall processing of entity records in regard to conflating a corpus of entity records organized into address clusters, and conflating a stream of entity records into the conflated corpus of entity records;
Figure 2 is a flow diagram illustrating an exemplary routine for processing a corpus of entity records into address clusters in an offline, asynchronous manner according to aspects of the disclosed subject matter;
Figure 3 is a flow diagram illustrating an exemplary routine for conflating a stream or set of entity records into a corpus of conflated entity records, according to aspects of the disclosed subject matter; and
Figure 4 is a block diagram illustrating exemplary components of an entity conflation service configured according to aspects of the disclosed subject matter.

### Detailed Description

For purposes of clarity and definition, the term "exemplary," as used in this document, should be interpreted as serving as an illustration or example of something, and it should not be interpreted as an ideal and/or a leading illustration of that thing. Additionally, when a word or term is followed by "(s)", the meaning should be interpreted as indicating the singular or the plural form of the word or term, depending on whether there is one instance of the term/item or whether there is one or multiple instances of the term/item. For example, with regard to a record that may list one or more web sites, the term "email(s)" should be interpreted in the context of an inbox: that there may be a single email in an inbox or that there may be plural emails in the inbox.

The term "entity" should be interpreted as representing an item or thing. Further, according to aspects of the disclosed subject matter, an entity (or a particular instance of an entity) is associated with a specific geographic location, i.e., the entity (or instance of the entity) is located at a specific location. An entity may, by way of illustration and not limitation, correspond to a person (having a home address and/or a business address, etc.), a business, an organization, a school, and the like.

By way of definition, an entity record corresponds to an entity and includes location data that identifies the geographic location of the entity, and non-location data or entity attribute data that includes information corresponding to the entity that is not location information. As indicated, the location data of an entity record will identify the geographic location of the entity (or instance of the entity). This location data may comprise, by way of illustration and not limitation, geographic coordinates (i.e., a latitude/longitude pair), quadrangle coordinates, an address, and the like. Entity attribute data comprises descriptive information about the entity that is not location data and may cover a wide spectrum of information that may include, by way of illustration and not limitation, a person's name, a business name, a telephone number, business classification (e.g., food services, professional services, etc.), a birthdate of an individual (entity), school name, salutation, and the like.

By way of definition, the act of conflating entity records corresponds to identifying two or more entity records that reference the same entity, merging the data of the identified two or more entity records into a single, conflated entity record, and replacing the two or more entity records with the single, conflated entity record in a corpus of entity records.

According to aspects of the disclosed subject matter, systems and methods for providing efficient entity record conflation are presented. More particularly, as location data tends to be fairly static and entity attribute data tends to be dynamic and fluid (e.g., a business at a location may close only to be replaced by another business), according to aspects of the disclosed subject matter, first processing phase is made in regard to conflating location data of a corpus of entity records. This first processing phase is conducted in an offline, asynchronous manner with the purpose of aggregating the entity records of a corpus of entity records into location clusters according to the location data of the entity records, where each location cluster is viewed having a likelihood greater than a predetermined threshold that the entity records of the location cluster correspond to a same structure at a particular geographic location. A second processing phase is conducted in a near real-time manner in regard to conflating received entity records of an entity record stream with the entity records of the corpus of entity records, first matched to a location cluster, and then matched to an entity record within the location cluster. Upon matching the received entity record with an entity record in a location cluster, the two entity records are conflated.

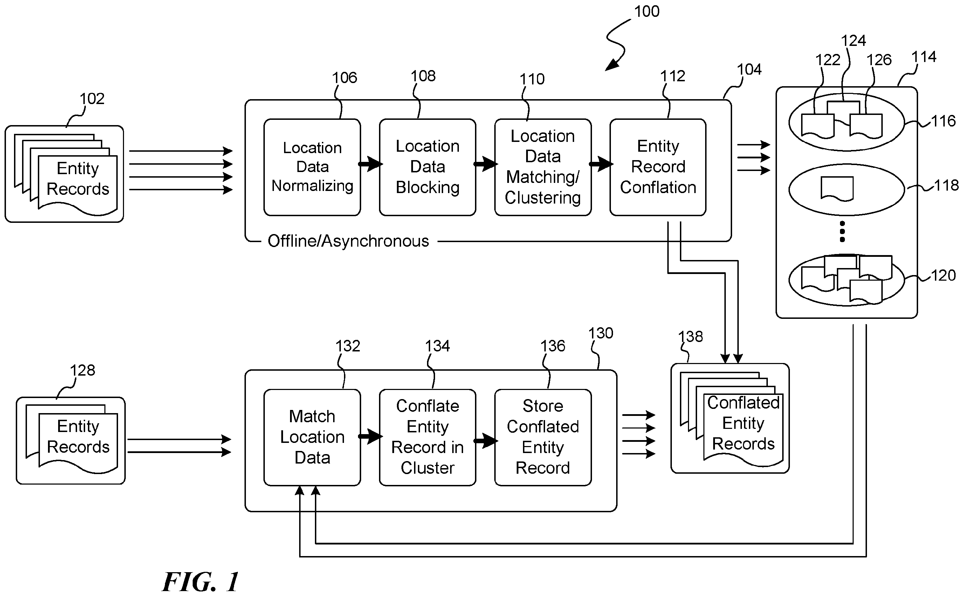

Turning now to the figures, Figure 1 is a block diagram illustrating an exemplary processing flow 100 in regard to, first, asynchronously processing a corpus of entity records and, second, to conflating entity records received in an entity record stream with the corpus of entity records. As shown in Figure 1, flow 100 begins with obtaining a corpus of entity records 102 comprising a plurality of entity records. According to aspects of the disclosed subject matter, the entity records are then first processed in an offline or asynchronous process 104. This offline process 104 is comprised of several logically discrete steps including location data blocking 106, location data normalizing 108, location data matching/clustering 110, and entity record conflation 112. As will be described in more detail below, the result of this first, offline/asynchronous process 104 is to generate a set 114 of location clusters 116-120, each location cluster comprising one or more entity records, where each entity record in a location cluster, such as entity records 122-126 of location cluster 116, are viewed as corresponding to a physical structure at a particular geographic location.

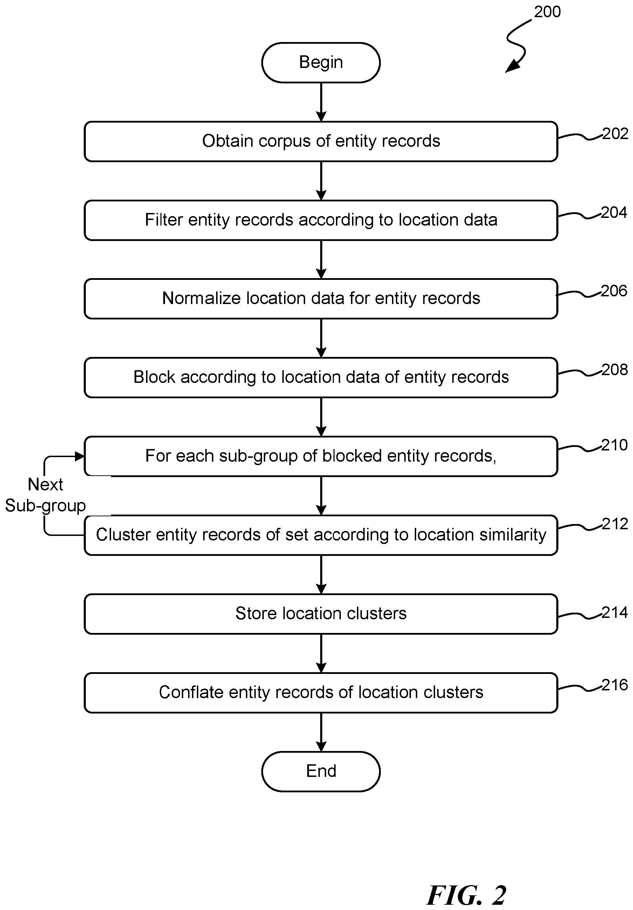

In regard to the offline process 104, reference is also made to Figure 2. Figure 2 is a flow diagram illustrating an exemplary routine 200 for processing a corpus of entity records into address clusters in an offline, asynchronous manner according to aspects of the disclosed subject matter. Thus, with reference to both Figures 1 and 2, beginning at block 202, a corpus of address records 102 is obtained. The corpus of address records may be obtained from a single source or a plurality of sources. At block 204, the entity records are filtered or examined according to the location data. Examining the entity records according location data is consistent with the offline/asynchronous processing of the corpus of entity records, since such processing may involve a substantially significant amount of time and resources. At block 206 which corresponds to the location data normalizing 106 of Figure 1, the location data of the entity records is normalized. Normalizing the location data of the entity records should be interpreted as ensuring that the fields and values of the location data are revised, as necessary, into a common format. Examples of normalizing location data values may include, by way of illustration and not limitation, converting abbreviations to an unabbreviated form, identifying and correcting misspellings of values, converting alternative numbering to a common format, and the like.

After normalizing the location data of the entity records, at block 208 which corresponds to the location data blocking 108 of Figure 1, the entity records are blocked according to the location data in order to generate one or more sub-groups of entity records, each sub-group having its own set of one or more blocking characteristics. By way of definition, blocking entity records according to location data should be interpreted as a grouping or a treatment of the entity records (in this instance according to the location data of the entity records) such that sub-groups of entity records are generated, where the entity records of each sub-group have in common all characteristics or values common to or associated with the sub-group. For example (by way of illustration and not limitation), blocking the location data of the entity records may be conducted according any one or more of a zip code, street names, building name, city, state, country, postal route, latitude/longitude, and the like.

At block 210 corresponding to the location data matching/clustering 110, an iteration is conducted among the sub-groups generated in the blocking step. In this iteration, at block 212 the entity records of the sub-group are matched and/or clustered according to location. In particular, as a result of the matching/clustering of the entity records of a sub-group, each resulting cluster includes one or more entity records that are viewed as belonging to the same physical structure at a specific geographic location. According to various embodiments of the disclosed subject matter, this matching/clustering may be completed according to a variety of clustering techniques that include, by way of illustration and not limitation, any one or more of: Jaccard similarity (also called Jaccard index), Cosine similarity, Agglomerative clustering, K-means, DBSCAN, Term Frequency-Inverse Document Frequency (TF-IDF), and the like. Further, this clustering may be based on N-grams constructed from the various terms and values in the normalized address data. Indeed, the matching and/or clustering is conducted according to various rules, algorithms, evaluation criteria or heuristics that determine a likelihood that the location data of a first entity record is a reference to the same location as all other entity records in the cluster. In at least one embodiment, the rules, algorithms, evaluation criteria and/or heuristics produce a value (the likelihood, e.g., a value between 0 and 1 where 0 indicates that the entity record does not belong to the cluster and a 1 indicates that the entity record certainly belongs to the cluster) indicative of whether or not the first entity record corresponds to the same physical location as other entity records in the cluster. When the likelihood exceeds a predetermined threshold, the entity record is included in the cluster as referencing to the same physical structure at a particular geographic location. Of course, the fact that two different entity records are viewed as referencing the same physical structure at a particular geographic location does not mean that the two entity records reference the same entity. As will be readily appreciated, office buildings, shopping centers, apartments and the like often occupy the same physical structure at a particular geographic location and include multiple entities. Of course, when it is determined that a particular entity record does not belong to the same physical structure at a geographic location, a new cluster may be created that includes the entity record that does not belong (according to the determined likelihood) to other clusters.

As an additional, optional, efficiency measure for enhancing the clustering step above, the entity records may be associated with a polygon identifier (not shown). A polygon identifier is a unique identifier corresponding to a polygon having a particular two-dimensional area at a specific geographic location. Matching according to a polygon identify can enhance efficiency in processing the corpus of entity records. Further, the polygon identifier is of particular usefulness when there are multiple entrance points to the same physical location/structure, such as when an entity, such as a business, is located in a building that has multiple entrances on the same street or upon multiple streets.

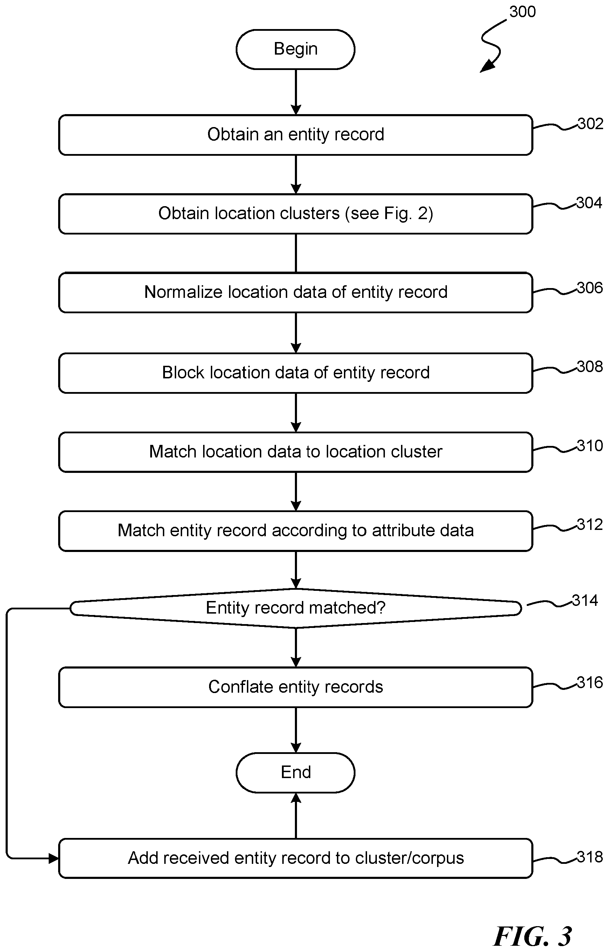

As indicated in Figure 2, this iteration continues for each sub-group until the sub-groups have been processed, at which point the routine 200 proceeds to block 214. At block 214, the set 114 of generated location clusters are stored for future use/reference by the online/near synchronous process 130 for conflating entity records of a stream 128 of entity records with the corpus 102 of entity records. Correspondingly, at block 216 corresponding to the entity record conflation 112 of Figure 1, the entity records of the corpus of entity records 102 are conflated. Conflating the entity records of the initial corpus 102 of entity records may be conducted as described in regard to the online/synchronous process 130, as further described in regard to routine 300 of Figure 3.

As indicated in Figure 1, the conflated entity records are also stored as the corpus 138 of conflated entity records. Of course, in conflating the entity records, the entity records of the location clusters 116-120 are also typically conflated such that each location cluster includes only one entity record corresponding to the same entity. After aggregating and conflating the corpus 102 of entity records, the offline/asynchronous routine 200 terminates.

With continued reference to Figure 1 and turning to Figure 3, Figure 3 is a flow diagram illustrating an exemplary routine 300 for conflating a stream or set of entity records into a corpus of conflated entity records, according to aspects of the disclosed subject matter. Beginning at block 302, the routine 300 obtains an entity record, such as an entity record of the stream 128 of entity records to be added/conflated into the conflated entity records. At block 304, the routine obtains the set 114 of location clusters 116-120 that was previously generated in the offline/asynchronous process 104 described in regard to routine 200. At block 306, as part of matching location data 132, the location data of the received entity record is normalized. This normalization is the same normalization that was described above in regard to block 206 of routine 200. After normalizing the location data, and as a another part of matching location data 132 of Figure 1, at block 308 the location data is blocked, as described above in regard to block 208 of routine 200. Thereafter, and as yet another part of the matching location data 132 of the online/synchronous conflation process 130, at block 310 the location data of the received entity record is matched to a location cluster of the set 114 of location clusters. Matching the entity to a location cluster is the same as described above in regard to 212 of routine 200.

With the received entity record matched to a location cluster, at block 312 and as part of conflating the entity record in the location cluster 134, the received entity record is matched against the entity records of the matched location cluster to determine if the entity referenced by the received entity record is already in the location cluster. Matching the received entity record to other entity records in the location cluster may comprise normalizing the attribute data of the entity record and applying one or more rules, algorithms, heuristics, and/or techniques in comparing the attribute data of the received entity record to the attribute data of the entity records in the location cluster.

At decision block 314 and as another part of conflating the entity record in the location cluster 134, a determination is made as to whether the received entity record is matched to an entity record in the location cluster. As with matching location data, the process of matching attribute data produces a likelihood that the received entity record matches an entity record in the location cluster. Thus, the determination of block 314 may be made by determining whether the likelihood returned by a matching function (which uses any of the rules, heuristics, techniques and/or algorithms) meets or exceeds a predetermined threshold. By way of illustration and not limitation, if the likelihood of a match (with a scale between 0 and 1) meets or exceeds a predetermined threshold of .75, the received entity record is considered to be a match of an entity record in the location cluster. Of course, the particular threshold value may be determined according to implementation needs and details.

If, at decision block 314 and as a part of merging the entity record in the location cluster 136, if the received entity record is matched to an entity record in the location cluster, at block 316 the received entity record is conflated with the matched entity. Alternatively, if the received entity record is not matched to an entity record in the location cluster, at block 318 and as a part of merging the entity record in the location cluster 136, the received entity record is added to the corpus of conflated entity records 138 and also added as another entity record to the location cluster. Thereafter, the routine 300 terminates.

Regarding routines 200 and 300 described above, as well as other processes (such as processes 104 and 130 of Figure 1) described herein, while these routines/processes are expressed in regard to discrete steps, these steps should be viewed as being logical in nature and may or may not correspond to any actual and/or discrete steps of any particular implementation. Also, the order in which these steps are presented in the various routines and processes, unless otherwise indicated, should not be construed as the only order in which the steps may be carried out. For example, with regard to routine 200, the step 204 of normalizing the location data may be conducted before or after the step 206 of filtering the entity records according to the location data. Further, in some instances, some of the steps of these routines may be omitted, including those that are identified as optional steps, e.g., step 308 of optionally determining and assigning a polygon identifier to a entity record. Those skilled in the art will recognize that the logical presentation of steps is sufficiently instructive to carry out aspects of the claimed subject matter irrespective of any particular language in which the logical instructions/steps are embodied.

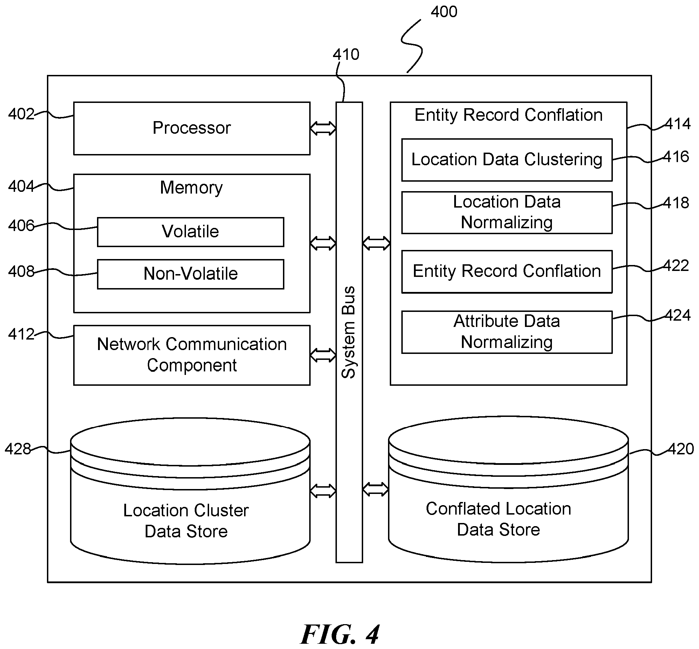

Of course, while these routines and/or processes include various novel features of the disclosed subject matter, other steps (not listed) may also be carried out in the execution of the subject matter set forth in these routines. Those skilled in the art will appreciate that the logical steps of these routines may be combined together or be comprised of multiple steps. Any or all of the steps of the above-described routines may be carried out in parallel or in series. Often, but not exclusively, the functionality of the various routines is embodied in software (e.g., applications, system services, libraries, and the like) that is executed on one or more processors of computing devices, such as the computing device described in regard Figure 4 below. Additionally, in various embodiments all or some of the various routines may also be embodied in executable hardware modules including, but not limited to, system on chips, codecs, specially designed processors and/or logic circuits, and the like on a computer system.

These routines/processes are typically embodied within executable code modules comprising routines, functions, looping structures, selectors such as if-then and if-then-else statements, assignments, arithmetic computations, and the like. However, the exact implementation in executable statement of each of the routines is based on various implementation configurations and decisions, including programming languages, compilers, target processors, operating environments, and the linking or binding operation. Those skilled in the art will readily appreciate that the logical steps identified in these routines may be implemented in any number of ways and, thus, the logical descriptions set forth above are sufficiently enabling to achieve similar beneficial results.

While many novel aspects of the disclosed subject matter are expressed in routines or processes embodied within applications (also referred to as computer programs), apps (small, generally single or narrow purposed, applications), executable modules and/or methods, these aspects may also be embodied as computer-executable instructions stored by computer-readable media, also referred to as computer-readable storage media, which are articles of manufacture. As those skilled in the art will recognize, computer-readable media can host, store and/or reproduce computer-executable instructions and data for later retrieval and/or execution. When the computer-executable instructions that are hosted or stored on the computer-readable storage devices are executed, the execution thereof causes, configures and/or adapts the executing computing device to carry out various steps, methods and/or functionality, including those steps, methods, and routines described above. Examples of computer-readable media include, but are not limited to: optical storage media such as Blu-ray discs, digital video discs (DVDs), compact discs (CDs), optical disc cartridges, and the like; magnetic storage media including hard disk drives, floppy disks, magnetic tape, and the like; memory storage devices such as random access memory (RAM), read-only memory (ROM), memory cards, thumb drives, and the like; cloud storage (i.e., an online storage service); and the like. While computer-readable media may deliver the computer-executable instructions (and data) to a computing device for execution via various transmission means and mediums, including carrier waves and/or propagated signals, for purposes of this disclosure computer readable media expressly excludes carrier waves and/or propagated signals.

Turning now to Figure 4, Figure 4 is a block diagram illustrating exemplary components of an entity record conflation service 400 as implemented on a computing device and configured according to aspects of the disclosed subject matter. The exemplary entity record conflation service 400 includes one or more processors (or processing units), such as processor 402, and a memory 404. The processor 402 and memory 404, as well as other components, are interconnected by way of a system bus 410.

The memory 404 typically (but not always) comprises both volatile memory 406 and non-volatile memory 408. Volatile memory 406 retains or stores information so long as the memory is supplied with power. In contrast, non-volatile memory 408 is capable of storing (or persisting) information even when a power supply is not available. Generally speaking, RAM and CPU cache memory are examples of volatile memory 406 whereas ROM, solid-state memory devices, memory storage devices, and/or memory cards are examples of non-volatile memory 408.

The exemplary entity record conflation service 400 further includes a network communication component 412 for interconnecting the location conflation service with other services, such as entity record provider sources 102-106 over a computer network, such as a local area network, an intranet, and wide area network that includes the Internet. The network communication component 412, which is sometimes referred to as a network interface card or NIC, communicates over a network using one or more communication protocols via a physical/tangible (e.g., wired, optical, etc.) connection, a wireless connection, or both. As will be readily appreciated by those skilled in the art, a network communication component, such as network communication component 412, is typically comprised of hardware and/or firmware components (and may also include or comprise executable software components) that transmit and receive digital and/or analog signals over a transmission medium (i.e., the network.)

As will be readily appreciated, the processor 402 executes instructions retrieved from the memory 404 (and/or from computer-readable media) in carrying out various functions, particularly in regard to responding to a single entity intent search query. The processor 402 may be comprised of any of a number of available processors such as single-processor, multi-processor, single-core units, and multi-core units.

The entity record conflation service 400 further includes an entity record conflation component 414 which obtains a corpus of entity records, conflates the entity records and generates a set 114 of location clusters in an offline/asynchronous process, as described above. The entity record conflation component 414 includes a location data clustering component 416 that clusters entity records according to normalized location data into one or more location clusters, where each location cluster includes entity records that correspond to an entity referenced at the same physical structure at a geographic location, i.e., are considered to be in the same "location." A location data normalizing component 418 normalizes elements of location data of the entity records into a common format according to heuristics, rules, tables, dictionaries, linguistic tools and the like.

An entity record conflation component 422 merges or conflates the entity records identified as referencing the same entity into a single, conflated entity record. Also, an attribute data normalizing component 424 normalizes the location attributes of the entity records, in particular normalizing elements of the location data into a common format according to heuristics, rules, tables, dictionaries, linguistic tools and the like.

Still further, the entity record conflation service 400 includes an location cluster data store that stores the location clusters 116-120 of like entity records (clustered according to the entity records' location data) for further processing, and a conflated entity record data store 420 that stores the corpus 138 of conflated entity records.

In regard to the entity record conflation component 414, while Figure 4 illustrates that the entity record conflation component includes various other components for conflating entity records, this is an illustrative embodiment and should not be viewed as limiting upon the disclosed subject matter. In alternative embodiments and/or configurations, all or some of the various components including the location clustering component 416, the location data normalizing component 418, the entity record conflation component 422, the attribute data normalization component 424, and the like may be implemented as independent but cooperative components of the entity record conflation service 400.

Regarding the various components of the exemplary entity record conflation service 400, those skilled in the art will appreciate that these components may be implemented as executable software modules stored in the memory of the computing device, as hardware modules and/or components (including SoCs - system on a chip), or a combination of the two. Moreover, in certain embodiments each of the various components may be implemented as an independent, cooperative process or device, operating in conjunction with or on one or more computer systems and/or computing devices. It should be further appreciated, of course, that the various components described above should be viewed as logical components for carrying out the various described functions. As those skilled in the art will readily appreciate, logical components and/or subsystems may or may not correspond directly, in a one-to-one manner, to actual, discrete components. In an actual embodiment, the various components of each computing device may be combined together or distributed across multiple actual components and/or implemented as cooperative processes on a computer network.

While various novel aspects of the disclosed subject matter have been described, it should be appreciated that these aspects are exemplary and should not be construed as limiting. Variations and alterations to the various aspects may be made without departing from the scope of the disclosed subject matter.

## Claims

1. A computer implemented method for conflating entity records including two or more entity records that reference a same entity in a corpus of entity records, wherein an entity record is a record in the corpus of entity records which corresponds to an entity and includes location data that identifies a geographic location of the entity and attribute data which is information corresponding to the entity that is not location information, wherein an entity is a person, a business, an organization or a school, the method comprising each of the following as executed by a processor as part of an online or synchronous process:
providing a set of location clusters, each location cluster of the set of location clusters including one or more entity records of the corpus of entity records having in common at least a common characteristic in their location data and belonging to a same physical structure at a particular geographic location, wherein, for each location cluster of the set of location clusters, the at least common characteristic corresponds to one or more blocking characteristics associated with the location cluster, wherein the set of location clusters is generated and stored in a prior offline or asynchronous process;
receiving (302), from a stream (128) of entity records to be added or conflated, an entity record to conflate with an entity record of the corpus of entity records;
matching (310) the received entity record to a location cluster of the set of location clusters according to the location data of the received entity record and the blocking characteristics of the location cluster;
matching (312) the received entity record against the one or more entity records of the matched location cluster to determine if the entity referenced by the received entity record is already in the location cluster, comprising matching the attribute data of the received entity record against the attribute data of the one or more entity records of the matched location cluster; and
when an entity record in the matched location cluster is determined to match (314) the received entity record, conflating (316) the received entity record with the matched entity record of the matched location cluster.

2. The computer implemented method of Claim 1, wherein:
the entity records of the corpus of entity records are associated with a polygon identifier having a particular two-dimensional area at a specific geographic location; and
wherein the provided set of location clusters is generated by clustering the entity records of the corpus of entity records according to the polygon identifiers of the entity records.

3. The computer implemented method of Claim 1, wherein the location data included in each entity record of the corpus of entity records comprise one of an address or coordinates.

4. The computer implemented method of Claims 2 and 3, wherein the provided set of location clusters is generated from the corpus of entity records according to the location data of each entity record, the generating comprising:
normalizing elements of the address data of the entity records of the corpus of entity records to a common format; and
clustering the entity records of the corpus of entity records according to the polygon identifiers of the entity records and the normalized location data of the entity records.

5. The computer implemented method of Claim 1, wherein matching (310) the received entity record to a location cluster of the set of location clusters according to the location data of the received entity record and the blocking characteristics of the location cluster comprises determining a likelihood that the location data of the received entity record references to a same location as all other entity records in the location cluster.

6. The computer implemented method of Claim 1, wherein an entity record in the matched location cluster is determined to match (314) the received entity record when the process of matching attribute data produces a likelihood that the received entity record matches the entity record in the location cluster meeting or exceeding a predetermined threshold.

7. The computer implemented method of Claim 1, wherein belonging to a same physical structure at a particular geographic location comprises belonging to a same building, same shopping center, or same apartment.

8. A computer readable medium bearing computer executable instructions which, when executed on a computing system comprising at least a processor, configure the computing system to carry out a method according to any of the preceding claims.

9. A computer system comprising a processor and a memory, wherein the processor is configured to execute instructions stored in the memory which cause the processor to carry out a method according to any of claims 1 to 7.

## Patentansprüche

1. Computerimplementiertes Verfahren zum Verschmelzen von Entitätseinträgen, die zwei oder mehr Entitätseinträge umfassen, die auf eine selbe Entität in einem Korpus von Entitätseinträgen verweisen, wobei ein Entitätseintrag ein Eintrag in dem Korpus von Entitätseinträgen ist, der einer Entität entspricht, und Ortsdaten umfasst, die einen geografischen Ort der Entität identifizieren, und Sachdaten, die Informationen sind, die der Entität entsprechen, die keine Ortsinformationen sind, wobei eine Entität eine Person, ein Geschäft, eine Organisation oder eine Schule ist, wobei das Verfahren jedes von Folgendem umfasst, welches von einem Prozessor als Teil eines Online- oder Synchronprozesses ausgeführt wird:
Bereitstellen einer Reihe von Orts-Clustern, wobei jeder Orts-Cluster der Reihe von Orts-Clustern einen oder mehrere Entitätseinträge des Korpus von Entitätseinträgen umfasst, die gemeinsam mindestens ein gemeinsames Merkmal in ihren Ortsdaten umfassen, und einer selben physikalischen Struktur an einem besonderen geografischen Ort angehören, wobei bei jedem der Reihe von Orts-Clustern das mindestens eine gemeinsame Merkmal einem oder mehreren blockierenden Merkmalen entspricht, die dem Orts-Cluster zugewiesen sind, wobei die Reihe von Orts-Clustern in einem zuvor Offline- oder Asynchronprozess erzeugt wird;
Empfangen (302), aus einem Stream (128) von Entitätseinträgen, die hinzuzufügen oder zu verschmelzen sind, eines Entitätseintrages zum Verschmelzen mit einem Entitätseintrag des Korpus von Entitätseinträgen;
Anpassen (310) des empfangenen Entitätseintrages an einen Orts-Cluster der Reihe von Orts-Clustern entsprechend den Ortsdaten des empfangenen Entitätseintrages und den blockierenden Merkmalen des Orts-Clusters;
Anpassen (312) des empfangenen Entitätseintrages gegenüber dem einen oder mehreren Entitätseinträgen des angepassten Orts-Clusters zum Bestimmen, ob die durch den empfangenen Entitätseintrag verwiesene Entität bereits in dem Orts-Cluster ist, umfassend das Anpassen der Sachdaten des empfangenen Entitätseintrages gegenüber den Sachdaten des einen oder mehrerer Entitätseinträge des angepassten Orts-Clusters; und wenn bestimmt wird, dass ein Entitätseintrag in dem angepassten Orts-Cluster dem empfangenen Entitätseintrag angepasst (314) ist, Verschmelzen (316) des empfangenen Entitätseintrages mit dem angepassten Entitätseintrag des angepassten Orts-Clusters.

2. Computerimplementiertes Verfahren nach Anspruch 1, wobei:
die Entitätseinträge des Korpus von Entitätseinträgen einer Polygonkennung zugewiesen sind, die einen besonderen zweidimensionalen Bereich an einem speziellen geografischen Ort aufweist; und
wobei die bereitgestellte Reihe von Orts-Clustern durch Clustern der Entitätseinträge des Korpus von Entitätseinträgen entsprechend den Polygonkennungen der Entitätseinträge erzeugt wird.

3. Computerimplementiertes Verfahren nach Anspruch 1, wobei die Ortsdaten, die in jedem Entitätseintrag des Korpus von Entitätseinträgen beinhaltet sind, eines von einer Adresse oder von Koordinaten umfassen.

4. Computerimplementiertes Verfahren nach Ansprüchen 2 und 3, wobei die bereitgestellte Reihe von Orts-Clustern aus dem Korpus von Entitätseinträgen entsprechend den Ortsdaten von jedem Entitätseintrag erzeugt wird, wobei das Erzeugen umfasst:
Normalisieren von Elementen der Adressdaten der Entitätseinträge des Korpus von Entitätseinträgen auf ein gemeinsames Format; und
Clustern der Entitätseinträge des Korpus von Entitätseinträgen entsprechend den Polygonkennungen der Entitätseinträge und den normalisierten Ortsdaten der Entitätseinträge.

5. Computerimplementiertes Verfahren nach Anspruch 1, wobei Anpassen (310) des empfangenen Entitätseintrages an einen Orts-Cluster der Reihe von Orts-Clustern entsprechend den Ortsdaten des empfangenen Ortseintrages und den blockierenden Merkmalen des Orts-Clusters Bestimmen einer Wahrscheinlichkeit umfasst, dass die Ortsdaten des empfangenen Entitätseintrages zu einem selben Ort verweisen, wie alle anderen Entitätseinträge in dem Orts-Cluster.

6. Computerimplementiertes Verfahren nach Anspruch 1, wobei ein Entitätseintrag in dem angepassten Orts-Cluster dazu bestimmt ist, an den empfangenen Entitätseintrag (314) angepasst zu werden, wenn der Prozess des Anpassens von Sachdaten eine Wahrscheinlichkeit ergibt, dass der empfangene Entitätseintrag an den Entitätseintrag im Orts-Cluster angepasst ist, der einer vorbestimmten Schwelle entspricht, oder diese übertrifft.

7. Computerimplementiertes Verfahren nach Anspruch 1, wobei das Angehören zu einer selben physikalischen Struktur an einem besonderen geografischen Ort das Angehören zu einem selben Gebäude, einem selben Einkaufszentrum, oder einer selben Wohnung umfasst.

8. Computerlesbares Medium, das von einem Computer ausführbare Anweisungen trägt, die, wenn sie in einem Computersystem ausgeführt werden, das mindestens einen Prozessor umfasst, das Computersystem konfigurieren, um ein Verfahren nach einem der vorstehenden Ansprüche auszuführen.

9. Computersystem, umfassend einen Prozessor und einen Speicher, wobei der Prozessor konfiguriert ist, um Anweisungen auszuführen, die in dem Speicher gespeichert sind, welche dafür sorgen, dass der Prozessor ein Verfahren nach einem der Ansprüche 1 bis 7 ausführt.

## Revendications

1. Procédé mis en oeuvre par ordinateur pour l'appariement par racine d'enregistrements d'entité incluant deux ou plusieurs enregistrements d'entité qui font référence à une même entité dans un corpus d'enregistrements d'entité, dans lequel un enregistrement d'entité est un enregistrement dans le corpus d'enregistrements d'entité qui correspond à une entité et inclut des données d'emplacement qui identifient un emplacement géographique de l'entité et des données d'attribut qui sont des informations correspondant à l'entité qui ne sont pas des informations d'emplacement, dans lequel une entité est une personne, une entreprise, une organisation ou une école, le procédé comprenant chacune des étapes suivantes tels qu'exécutées par un processeur en tant que partie d'un processus en ligne ou synchrone :
la fourniture d'un ensemble de clusters d'emplacement, chaque cluster d'emplacement de l'ensemble de clusters d'emplacement incluant un ou plusieurs enregistrements d'entité du corpus d'enregistrements d'entité ayant en commun au moins une caractéristique commune dans leurs données d'emplacement et appartenant à une même structure physique au niveau d'un emplacement géographique particulier, dans lequel, pour chaque cluster d'emplacement de l'ensemble de clusters d'emplacement, la au moins une caractéristique commune correspond à une ou plusieurs caractéristiques de blocage associées au cluster d'emplacement, dans lequel l'ensemble de groupes d'emplacement est généré et stocké dans un processus préalable hors ligne ou asynchrone ;
la réception (302), à partir d'un flux (128) d'enregistrements d'entité à ajouter ou à apparier par racine, d'un enregistrement d'entité à apparier par racine avec un enregistrement d'entité du corpus d'enregistrements d'entité ;
la mise en correspondance (310) de l'enregistrement d'entité reçu avec un cluster d'emplacement de l'ensemble de clusters d'emplacement en fonction des données d'emplacement de l'enregistrement d'entité reçu et des caractéristiques de blocage du cluster d'emplacement ;
la mise en correspondance (312) de l'enregistrement d'entité reçu avec les un ou plusieurs enregistrements d'entité du cluster d'emplacement mis en correspondance afin de déterminer si l'entité référencée par l'enregistrement d'entité reçu est déjà dans le cluster d'emplacement, comprenant la mise en correspondance des données d'attribut de l'enregistrement d'entité reçu avec les données d'attribut des un ou plusieurs enregistrements d'entité du cluster d'emplacement mis en correspondance ; et lorsqu'il est déterminé qu'un enregistrement d'entité dans le cluster d'emplacement mis en correspondance correspond (314) à l'enregistrement d'entité reçu, l'appariement par racine (316) de l'enregistrement d'entité reçu avec l'enregistrement d'entité mis en correspondance du cluster d'emplacement mis en correspondance.

2. Procédé mis en œuvre par ordinateur selon la revendication 1, dans lequel :
les enregistrements d'entité du corpus d'enregistrements d'entité sont associés à un identifiant de polygone présentant une zone bidimensionnelle particulière au niveau d'un emplacement géographique spécifique ; et
dans lequel l'ensemble de clusters d'emplacement fourni est généré en regroupant les enregistrements d'entité du corpus d'enregistrements d'entité en fonction des identifiants de polygone des enregistrements d'entité.

3. Procédé mis en œuvre par ordinateur selon la revendication 1, dans lequel les données d'emplacement inclus dans chaque enregistrement d'entité du corpus d'enregistrements d'entité comprennent l'une d'une adresse ou de coordonnées.

4. Procédé mis en œuvre par ordinateur selon les revendications 2 et 3, dans lequel l'ensemble clusters d'emplacement fourni est généré à partir du corpus d'enregistrements d'entité en fonction des données d'emplacement de chaque enregistrement d'entité, la génération comprenant :
la normalisation d'éléments des données d'adresse des enregistrements d'entité du corpus d'enregistrements d'entité dans un format commun ; et
le regroupement des enregistrements d'entité du corpus d'enregistrements d'entité en fonction des identifiants de polygone des enregistrements d'entité et des données d'emplacement normalisées des enregistrements d'entité.

5. Procédé mis en œuvre par ordinateur selon la revendication 1, dans lequel la mise en correspondance (310) de l'enregistrement d'entité reçu avec un cluster d'emplacement de l'ensemble de clusters d'emplacement en fonction des données d'emplacement de l'enregistrement d'entité reçu et des caractéristiques de blocage du cluster d'emplacement comprend la détermination d'une probabilité que les données d'emplacement de l'enregistrement d'entité reçu fassent référence à un emplacement identique à tous les autres enregistrements d'entité dans cluster d'emplacement.

6. Procédé mis en œuvre par ordinateur selon la revendication 1, dans lequel il est déterminé qu'un enregistrement d'entité dans le cluster d'emplacement mis en correspondance correspond (314) à l'enregistrement d'entité reçu lorsque le processus de mise en correspondance des données d'attribut produit une probabilité que l'enregistrement d'entité reçu corresponde à l'enregistrement d'entité dans le cluster d'emplacement en atteignant ou en dépassant un seuil prédéterminé.

7. Procédé mis en œuvre par ordinateur selon la revendication 1, dans lequel l'appartenance à une même structure physique au niveau d'un emplacement géographique particulier comprend l'appartenance à un même bâtiment, un même centre commercial ou un même appartement.

8. Support lisible par ordinateur portant des instructions exécutables par ordinateur qui, lorsqu'elles sont exécutées sur un système informatique comprenant au moins un processeur, configurent le système informatique de façon à mettre en œuvre un procédé selon l'une quelconque des revendications précédentes.

9. Système informatique comprenant un processeur et une mémoire, dans lequel le processeur est configuré pour exécuter des instructions stockées dans la mémoire qui amènent le processeur à mettre en œuvre un procédé selon l'une quelconque des revendications 1 à 7.
